# EUROPEAN PATENT APPLICATION

(11) **EP 3 037 997 A1**
(43) Date of publication of application: **29.06.2016**
(21) Application number: 15202388.3
(22) Date of filing: 23.12.2015
(51) Int. Cl.: G06F 21/31, G06F 21/32, H04W 12/06, H04W 12/08

(54) **APPARATUS, LOGIN PROCESSING METHOD, AND PROGRAM**

(30) Priority: 26.12.2014 JP 2014265897
(71) Applicant: FUJITSU LIMITED, Kawasaki-shi, Kanagawa 211-8588 (JP)
(72) Inventor: Semba, Satoshi, Kanagawa 211-8588 (JP)
(74) Representative: Hoffmann Eitle

(57) **Abstract**

An apparatus including: a registration screen display unit configured to display a registration screen on a screen based on a login screen display application program; a generating unit configured to generate random character strings corresponding to an input of an identifier on the registration screen; a character string display unit configured to display the character strings on the registration screen; a storage unit configured to store the character strings in a memory; and a widget display unit configured to read out the character strings from the memory and display a widget of the character strings on a screen based on a widget display application program.

## Description

### FIELD

The embodiments discussed herein are related to an apparatus, a login processing method, and a program.

### BACKGROUND

In the related art, fraud reduction methods using icons are known as a way to confirm whether or not a login application is correct when logging into a login processing apparatus such as an information processing apparatus by inputting personal information. In the methods described above, a user is able to avoid being defrauded of personal information by a fraudulent login application by confirming that an icon which was selected at the time of registration is displayed on a login screen.

As examples of the related art techniques, Japanese Laid-open Patent Publication No. 2007-102793 and Japanese Laid-open Patent Publication No. 2010-170553 are known.

### SUMMARY

The present disclosure is directed to an apparatus includes: a registration screen display unit configured to display a registration screen on a screen based on a login screen display application program; a generating unit configured to generate random character strings corresponding to an input of an identifier on the registration screen; a character string display unit configured to display the character strings on the registration screen; a storage unit configured to store the character strings in a memory; and a widget display unit configured to read out the character strings from the memory and display a widget of the character strings on a screen based on a widget display application program.

### BRIEF DESCRIPTION OF DRAWINGS

FIG. 1 (FIG. 1A and FIG. 1B) is a diagram which illustrates an example of a configuration of the external appearance of a login processing apparatus;
FIG. 2 is a diagram which illustrates an example of a hardware configuration of the login processing apparatus;
FIG. 3 is a diagram which illustrates an example of an application which is installed in the login processing apparatus;
FIG. 4 (FIG. 4A, FIG. 4B and FIG. 4C) is a diagram which illustrates examples of serial number information, authentication information, and widget setting information;
FIG. 5 is a diagram which illustrates an example of a functional configuration of a registration unit;
FIG. 6 is a diagram which illustrates an example of a functional configuration of an authentication unit;
FIG. 7 is a diagram which illustrates an example of a functional configuration of a home screen display unit;
FIG. 8 is a diagram which illustrates an example of a functional configuration of a widget unit;
FIG. 9 is a flowchart of a process at the time of activating the login processing apparatus;
FIG. 10 is a flowchart of a new registration process;
FIG. 11 (FIG.11A, FIG. 11B, FIG. 11C, FIG. 11D and FIG. 11E) is a diagram which illustrates transitions on a display screen of the login processing apparatus at the time of a new registration process;
FIG. 12 (FIG. 12A, FIG. 12B, FIG. 12C, FIG. 12D and FIG. 12E) is a diagram which illustrates transitions on the display screen of the login processing apparatus at the time of a new registration process;
FIG. 13 is a flowchart of a login process;
FIG. 14 (FIG. 14A, FIG. 14B, FIG. 14C and FIG. 14D) is a diagram which illustrates transitions on the display screen of the login processing apparatus at the time of a new registration process;
FIG. 15 (FIG. 15A, FIG. 15B, FIG. 15C and FIG. 15D) is a diagram which illustrates transitions on the display screen of the login processing apparatus at the time of a new registration process;
FIG. 16 is a flowchart of a re-registration process;
FIG. 17 (FIG. 17A, FIG. 17B and FIG. 17C) is a diagram which illustrates transitions on the display screen of the login processing apparatus at the time of the re-registration process; and
FIG. 18 (FIG. 18A, FIG. 18B and FIG. 18C) is a diagram which illustrates transitions on the display screen of the login processing apparatus at the time of the re-registration process.

### DESCRIPTION OF EMBODIMENTS

According to related- art techniques, there are cases where it is not possible to avoid fraudulent applications using the methods described above. Firstly, there are a significant number of cases where the icon is an image which is not very familiar to the user. For this reason, in a case where the fraudulent application displays an appropriate icon on a false login screen, there is a concern that the user will not notice that the application is fraudulent.

In addition, those trying to commit fraud are also able to acquire icons through a false registration screen. For example, fraudsters may display a false icon changing screen and prompt the user to change the icon in the same manner as a password or the like is regularly changed. In a case where the user is deceived due to this, the icon selected by the mistaken operation of the user is subsequently displayed on a false login screen. Therefore, the user mistakes the false screen for a correct login screen and is defrauded of his or her personal information such as a password or biometric image.

In this manner, in fraud reduction methods using icons, there are problems in that there will be cases where it is not possible to avoid being defrauded of personal information by the fraudulent application.

One aspect of the present embodiment is to increase a capacity for detecting fraudulent applications and strengthening security.

Hereinafter, description will be given of embodiments with reference to the accompanying diagrams. Here, in the present specification and diagrams, the same reference numerals will be used for constituent elements which substantially have the same functional configuration and overlapping description thereof will be omitted.

### [First Embodiment]

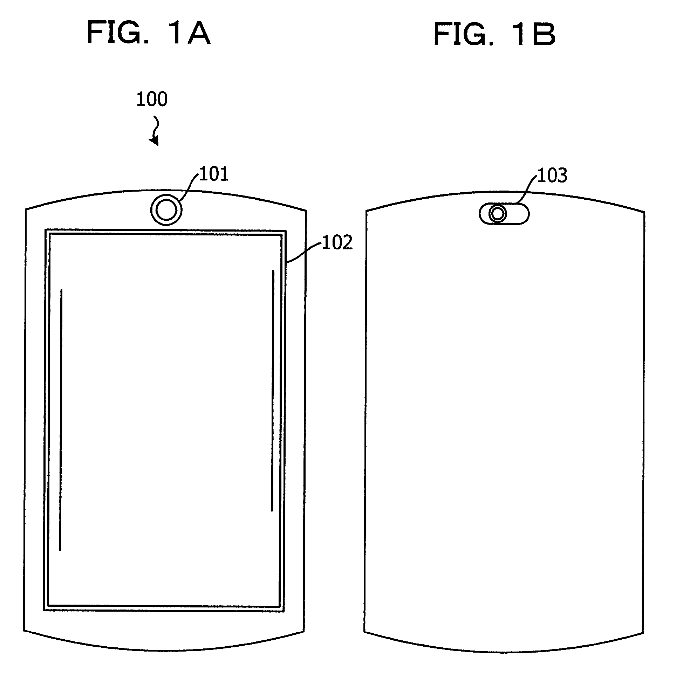

Firstly, description will be given of the configuration of the external appearance of a login processing apparatus according to a first embodiment. FIG. 1A and FIG. 1B are diagrams which illustrate an example of the configuration of the external appearance of a login processing apparatus. Here, in the present embodiment, a login processing apparatus 100 is, for example, a mobile terminal such as a smart phone which has an imaging function.

FIG. 1A is a diagram which illustrates a surface (a first surface) operated by a user when the user holds the login processing apparatus 100. As illustrated in FIG. 1A, at least a first imaging unit 101 and a display screen 102 are arranged on the first surface of the login processing apparatus 100.

The first imaging unit 101 is arranged such that the imaging direction is the same as the display direction of the display screen 102. For this reason, for example, the user who holds the login processing apparatus 100 uses the first imaging unit 101 to take an image of their own face. At this time, the user performs the imaging operation using operation buttons on the display screen 102 while looking at the face image which is imaged by the first imaging unit 101 and displayed on the display screen 102.

FIG. 1B is a diagram which illustrates the surface (a second surface) which is positioned on the opposite side to the first surface of the login processing apparatus 100. As illustrated in FIG. 1B, a second imaging unit 103 is arranged on the second surface of the login processing apparatus 100.

The second imaging unit 103 is arranged such that the imaging direction is opposite to the display direction of the display screen 102. For this reason, for example, the user who holds the login processing apparatus 100 uses the second imaging unit 103 to take an image of a site other than their own face (for example, their palm). Here, at this time, the user performs the imaging operation using the operation buttons on the display screen 102 while looking at the palm image which is imaged by the second imaging unit 103 and displayed on the display screen 102.

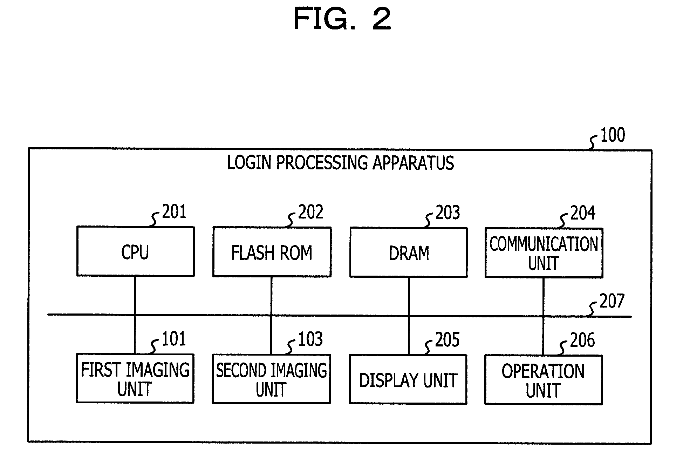

Next, description will be given of the hardware configuration of the login processing apparatus 100. FIG. 2 is a diagram which illustrates the hardware configuration of the login processing apparatus. As illustrated in FIG. 2, the login processing apparatus 100 is provided with a CPU 201, a flash Read Only Memory (ROM) 202, and a Dynamic Random Access Memory (DRAM) 203. In addition, the login processing apparatus 100 is provided with a communication unit 204, the first imaging unit 101, the second imaging unit 103, a display unit 205, and an operation unit 206. Here, each of the units of the login processing apparatus 100 is coupled to the other units via a bus 207.

The CPU 201 is a computer which executes various types of programs which include applications which are stored in the flash ROM 202.

The flash ROM 202 is a non-volatile memory. The flash ROM 202 stores applications which are installed in the login processing apparatus 100, various types of programs such as programs which are desirable for the CPU 201 in order to execute the installed applications, data, and the like.

The DRAM 203 is a main storage apparatus. The DRAM 203 functions as a work region which is utilized when various types of programs stored in the flash ROM 202 are executed by the CPU 201.

The communication unit 204 is a wireless Wide Area Network (WAN) module or a wireless Local Area Network (LAN) module such as 3G or 3G LTE. The login processing apparatus 100 communicates with other mobile terminals or couples to the Internet via the communication unit 204.

The first imaging unit 101 and the second imaging unit 103 generate image data by imaging. The display unit 205 includes the display screen 102 and displays image data. The operation unit 206 receives various types of operations performed by the user with respect to the login processing apparatus 100. Here, the operation unit 206 in the present embodiment includes a touch panel and identifies the contents of instructions by detecting positions tapped by the user.

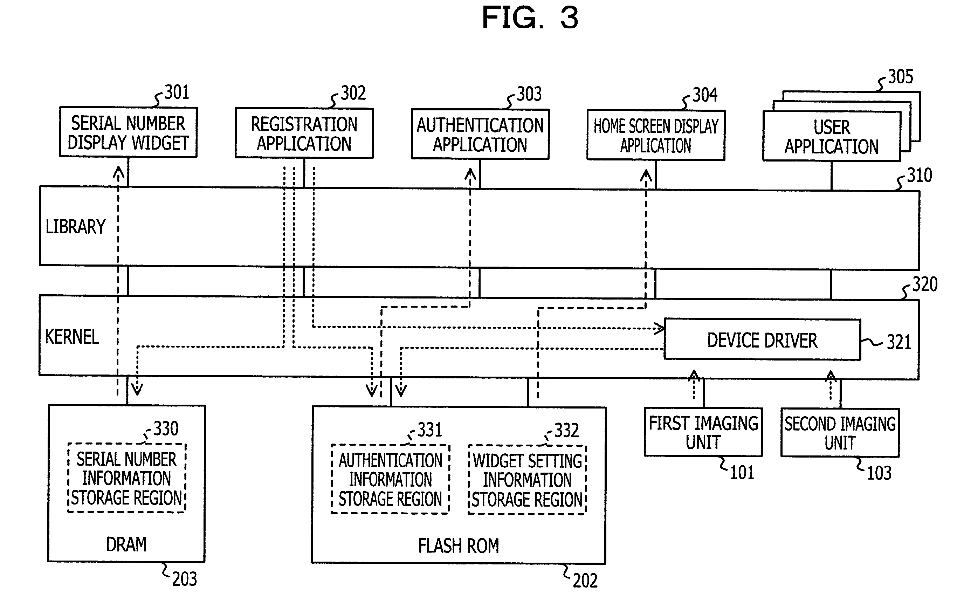

Next, description will be given of an application which is installed in the login processing apparatus 100. FIG. 3 is a diagram which illustrates an example of an application which is installed in a login processing apparatus.

As illustrated in FIG. 3, the application which is installed in the login processing apparatus 100 includes a serial number display widget 301, a registration application 302, and an authentication application 303. Furthermore, the application which is installed in the login processing apparatus 100 includes a home screen display application 304 and a user application 305. Here, in the example in FIG. 3, the registration application 302 and the authentication application 303 are illustrated as different applications; however, for example, both may be one application such as a login screen display application.

The serial number display widget 301 is a widget display application which displays serial numbers. The widget display application is a miniaturized application by which the user is able to obtain information on a home screen at a glance. Here, the serial numbers are generated based on random numbers when registering a user (a new registration) in the login processing apparatus 100 and are, for example, random character strings which include numeric values of a plurality of digits or the like.

The registration application 302 is an application which newly registers the user in the login processing apparatus 100. The registration application 302 is executed by being called up by the home screen display application 304 when activating the login processing apparatus 100.

The authentication application 303 is an application which authenticates the user who logs in to the login processing apparatus 100. The authentication application 303 is executed by being called up by the home screen display application 304 when activating or upon resuming use of the login processing apparatus 100. Here, upon resuming refers to, for example, when the login processing apparatus 100 returns from a power saving mode.

The home screen display application 304 is an application which is executed by being initially called up when activating or resuming use of the login processing apparatus 100.

The user application 305 is an application which performs various types of processes and which is activated by the user tapping an icon displayed on the home screen.

A library 310 is a collection of functions, subroutines, and the like which have specific functions and a kernel 320 is a basic function of an Operating System (OS). In addition, a device driver 321 is incorporated into the OS and controls the first imaging unit 101, the second imaging unit 103, and the like.

The operations of the hardware of the login processing apparatus 100 are controlled by executing the library 310, the kernel 320, the device driver 321, and the like. The operations of the hardware of the login processing apparatus 100 include a display operation of the display unit 205, a communication operation of the communication unit 204, a storage operation of the flash ROM 202 or the DRAM 203, an input operation of the operation units 206, an imaging operation of the first imaging unit 101 or the second imaging unit 103, and the like.

In the login processing apparatus 100, reading and writing in the same memory region in the DRAM 203 is prohibited between applications in order to improve security. However, the sharing of memory regions in the DRAM 203 is allowed between applications which are signed with the same secrecy certification (certification which includes an approximately 2048 bit secret key using an RSA encryption method). In the present embodiment, the serial number display widget 301 and the registration application 302 are signed with the same secrecy certification and share the same memory region.

In detail, the serial number display widget 301 and the registration application 302 share a serial number information storage region 330 in the DRAM 203. Accordingly, serial numbers which are generated by execution of the registration application 302 and stored in the serial number information storage region 330 are read out by executing the serial number display widget 301.

The flash ROM 202 has an authentication information storage region 331 which stores authentication information (personal information) such as a user ID, or face image data or palm image data of the user which is acquired by executing the registration application 302. The authentication information which is stored in the authentication information storage region 331 is read out by executing the authentication application 303.

In addition, the flash ROM 202 has a widget setting information storage region 332 in which widget setting information is stored by installing the serial number display widget 301. The widget setting information which is stored in the widget setting information storage region 332 is read out by executing the home screen display application 304.

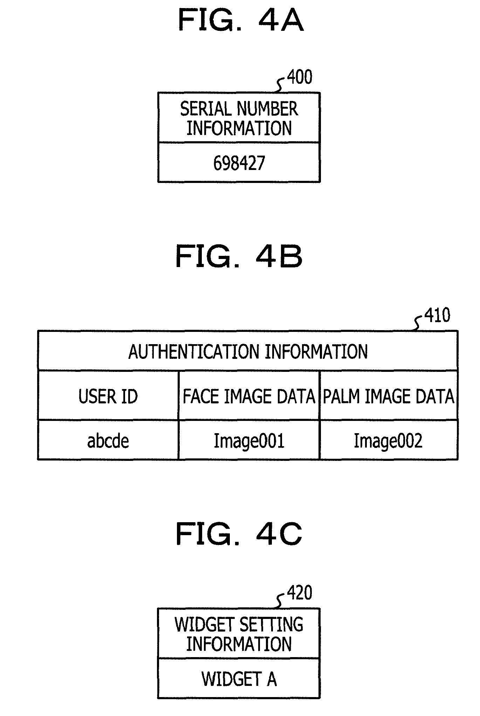

Next, description will be given of serial number information which is stored in the serial number information storage region 330, authentication information which is stored in the authentication information storage region 331, and widget setting information which is stored in the widget setting information storage region 332. FIG. 4 is a diagram which illustrate examples of serial number information, authentication information, and widget setting information.

As illustrated in FIG. 4A, serial number information 400 in the present embodiment includes a 6-digit numeric value. The 6-digit numeric value which is illustrated in the serial number information 400 is determined based on random numbers which are generated by executing the registration application 302. Here, the serial number information 400 is not limited to a 6-digit numeric value and may be a character string which includes characters such as letters or may have a number of digits (number of characters) other than 6 (6 characters).

As illustrated in FIG. 4B, "user ID", "face image data", and "palm image data" are included in the items of information relating to authentication information 410 in the present embodiment.

An identifier which is input by the user when the user carries out a new registration on the login processing apparatus 100 is stored under "user ID" (User ID="abcde" in the example in FIG. 4B).

Face image data of the user which is imaged by the first imaging unit 101 when the user carries out a new registration on the login processing apparatus 100 is stored in the "face image data" (File Name="Image 001" in the example in FIG. 4B). Palm image data of the user which is imaged by the second imaging unit 103 when the user carries out a new registration on the login processing apparatus 100 is stored in the "palm image data" (File Name="Image 002" in the example in FIG. 4B).

As illustrated in FIG. 4C, the title of a serial number display widget which is installed in the login processing apparatus 100 is stored in widget setting information 420 in the present embodiment (Application Name="Widget A" in the example in FIG. 4C). In the case of the login processing apparatus 100, a serial number display widget is installed in advance at the time of shipping and the title of the serial number display widget is stored in the widget setting information 420. Here, in a case of newly installing a widget, the user sets the widget which is newly installed in the widget setting information 420 with respect to the home screen display application 304. Due to this, it is possible to activate the new widget at the time of home screen display.

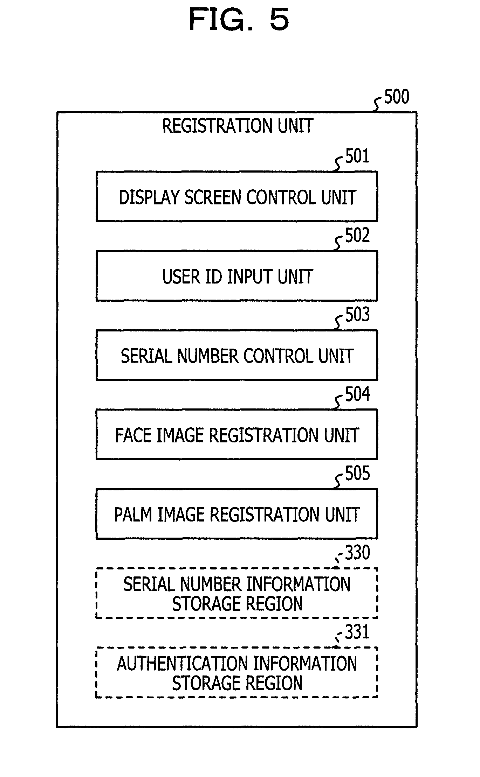

Next, description will be given of the functions of a registration unit which are realized by the CPU 201 executing the registration application 302. FIG. 5 is a diagram which illustrates a functional configuration of a registration unit. As illustrated in FIG. 5, a registration unit 500 has a display screen control unit 501, a user ID input unit 502, a serial number control unit 503, a face image registration unit 504, and a palm image registration unit 505.

The display screen control unit 501 displays a new registration screen (registration interface), which is used when the user carries out a new registration on the login processing apparatus 100, on the display screen 102. In other words, the display screen control unit 501 functions as a registration screen display unit.

The user ID input unit 502 receives a user ID which is input by the user on the new registration screen displayed on the display screen 102. In addition, the user ID input unit 502 notifies the serial number control unit 503 of the received user ID. Furthermore, the user ID input unit 502 stores the received user ID in the authentication information storage region 331 of the flash ROM 202.

The serial number control unit 503 generates random numbers according to the notification from the user ID input unit 502 and determines a serial number. In other words, the serial number control unit 503 functions as a generating unit which generates random numbers. In addition, the serial number control unit 503 notifies the display screen control unit 501 of the determined serial number and displays the determined serial number on the new registration screen. In other words, the display screen control unit 501 functions as a character string display unit. The serial number control unit 503 stores the determined serial number in the serial number information storage region 330 of the DRAM 203. In other words, the serial number control unit 503 functions as a storage unit.

The face image registration unit 504 controls the first imaging unit 101 and images a face image of the user in a case where an imaging instruction is input by the user on the new registration screen. In addition, the face image registration unit 504 stores the face image data of the user which is obtained by the imaging of the first imaging unit 101 in the authentication information storage region 331 of the flash ROM 202 in association with the user ID. In other words, the face image registration unit 504 functions as a face image storage unit. Furthermore, the face image registration unit 504 notifies the display screen control unit 501 of the face image data of the user and displays the face image data on the new registration screen.

The palm image registration unit 505 controls the second imaging unit 103 and images an image of the user's palm in a case where an imaging instruction is input by the user on the new registration screen. In addition, the palm image registration unit 505 stores the palm image data of the user which is obtained by the imaging of the second imaging unit 103 in the authentication information storage region 331 of the flash ROM 202 in association with the user ID. In other words, the palm image registration unit 505 functions as an authentication image storage unit. Furthermore, the palm image registration unit 505 notifies the display screen control unit 501 of the palm image data of the user and displays the palm image data on the new registration screen.

Next, description will be given of functions of an authentication unit which are realized by the CPU 201 executing the authentication application 303.

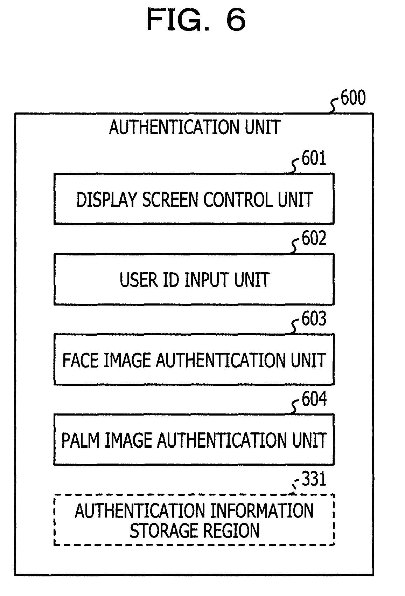

FIG. 6 is a diagram which illustrates a functional configuration of an authentication unit. As illustrated in FIG. 6, an authentication unit 600 has a display screen control unit 601, a user ID input unit 602, a face image authentication unit 603, and a palm image authentication unit 604.

The display screen control unit 601 displays an authentication screen, which is used when authenticating the user who is logging into the login processing apparatus 100, on the display screen 102. In other words, the display screen control unit 601 functions as an authentication screen display unit.

The user ID input unit 602 receives a user ID which is input by the user on the authentication screen displayed on the display screen 102. In addition, the user ID input unit 602 notifies the face image authentication unit 603 and the palm image authentication unit 604 of the received user ID.

The face image authentication unit 603 refers to the authentication information storage region 331 and reads out the face image data which is stored in association with the notified user ID in a case where there is a notification of the user ID from the user ID input unit 602. In addition, the face image authentication unit 603 notifies the display screen control unit 601 of the read out face image data and displays the data on the authentication screen. In other words, the display screen control unit 601 functions as a face image display unit. Due to this, the user is able to judge whether or not the authentication application is a fraudulent application simply by confirming whether the face image displayed on the authentication screen is their own face image or not.

The palm image authentication unit 604 controls the second imaging unit 103 and images an image of the user's palm in a case where an imaging instruction is input by the user on the authentication screen. In addition, the palm image authentication unit 604 reads out the palm image data, which is stored in association with the user ID which is notified from the user ID input unit 602, from the authentication information storage region 331. Furthermore, the palm image authentication unit 604 compares the palm image data of the user which is obtained by the imaging of the second imaging unit 103 and the palm image data which is read out from the authentication information storage region 331. Due to this, it is determined in the palm image authentication unit 604 whether or not the user relating to the palm image data which is imaged by the second imaging unit 103 and the user relating to the palm image data which is read out from the authentication information storage region 331 match. In a case where it is determined that there is a match, it is determined that the login of the user is a success in the palm image authentication unit 604. On the other hand, in a case where it is determined that the users are not the same, it is determined that the login of the user is a failure in the palm image authentication unit 604.

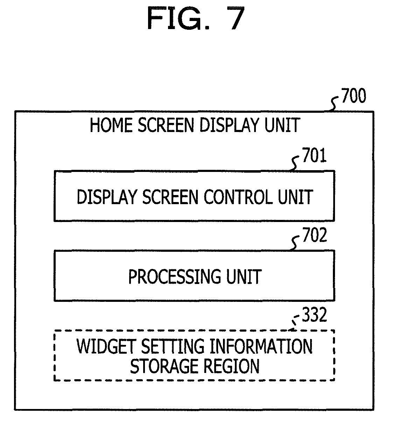

Next, description will be given of functions of a home screen display unit which are realized by the CPU 201 executing the home screen display application 304. FIG. 7 is a diagram which illustrates a functional configuration of a home screen display unit. As illustrated in FIG. 7, a home screen display unit 700 has a display screen control unit 701 and a processing unit 702.

The display screen control unit 701 detects activating or resuming use of the login processing apparatus 100 and displays a screen (referred to below as an "initial screen") which is used when carrying out a new registration of a user or performing a login for a user. In addition, the display screen control unit 701 calls up the registration application 302 or the authentication application 303 according to the selection of the user on the initial screen. In addition, the display screen control unit 701 displays the home screen on the display screen 102 of the login processing apparatus 100 in a case where the login of the user to the login processing apparatus 100 is a success. Furthermore, the display screen control unit 701 refers to the widget setting information storage region 332 of the flash ROM 202 and executes widgets which are stored in the widget setting information storage region 332 when displaying the home screen. In the present embodiment, the title of the serial number display widget 301 is stored in the widget setting information storage region 332. For this reason, the display screen control unit 701 executes the serial number display widget 301 when displaying the home screen.

The processing unit 702 receives an instruction for activating the user application 305 on the home screen which is displayed on the display screen 102 of the login processing apparatus 100 and gives an instruction to activate the user application 305.

Next, description will be given of functions of the widget unit which are realized by the CPU 201 executing the serial number display widget 301.

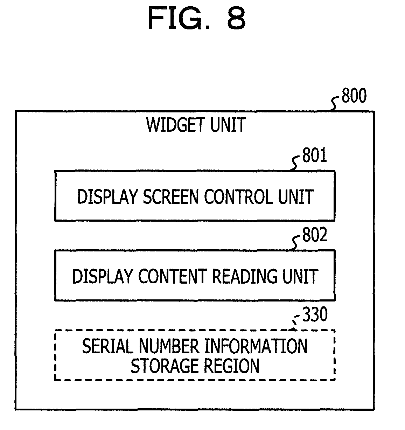

FIG. 8 is a diagram which illustrates a functional configuration of a widget unit. As illustrated in FIG. 8, a widget unit 800 has a display screen control unit 801 and a display content reading unit 802.

The display screen control unit 801 receives an activating instruction from the home screen display unit 700 when activating the home screen display application 304 and notifies the display content reading unit 802 of a request for reading out the serial number. In addition, the display screen control unit 801 displays the serial number, which is notified from the display content reading unit 802 according to the reading out request, on the home screen. In other words, the display screen control unit 801 functions as a widget display unit.

The display content reading unit 802 receives a notification of the reading out request from the display screen control unit 801, accesses the serial number information storage region 330 of the DRAM 203, and reads out the serial number. In addition, the display content reading unit 802 notifies the display screen control unit 801 of the read out serial number.

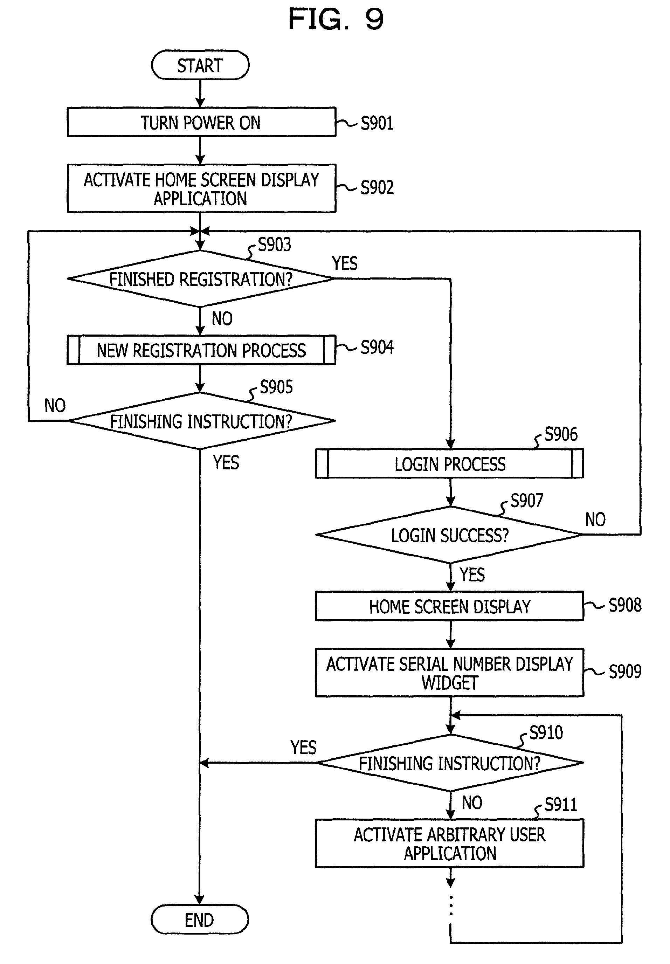

Next, description will be given of the flow of a process at the time of activating or resuming use of the login processing apparatus 100 (here, since the processes at the time of activating and resuming use are substantially the same, description will be given here of the process at the time of activating). FIG. 9 is a flowchart of a process at the time of activating a login processing apparatus.

As illustrated in FIG. 9, the login processing apparatus 100 is activated when the user turns on the power of the login processing apparatus 100 in S901.

By activating the login processing apparatus 100, in S902, the home screen display application 304 is called up and activates and the display screen control unit 701 of the home screen display unit 700 displays the initial screen.

In S903, the display screen control unit 701 of the home screen display unit 700 determines whether or not the new registration of the user is completed. In the case of determining that the new registration of the user is not completed, an instruction to carry out new registration of the user is received on the initial screen and the process proceeds to S904.

In S904, the display screen control unit 701 of the home screen display unit 700 activates the registration application 302 and the serial number display widget 301. Due to this, the display screen control unit 701 of the home screen display unit 700 executes a new registration process in relation to the registration unit 500 and the widget unit 800. Here, the details of the new registration process will be described below.

When the new registration process in S904 is completed, in S905, the display screen control unit 701 of the home screen display unit 700 determines whether or not an ending instruction (for example, an instruction to shut down the power source) is input. In a case where it is determined that the ending instruction is input in S905, the process is ended.

On the other hand, in S905, in a case where it is determined that an ending instruction is not input, the process returns to S903. In S903, in a case where the display screen control unit 701 of the home screen display unit 700 receives the login instruction of the user on the initial screen, the process proceeds to S906.

In S906, the display screen control unit 701 of the home screen display unit 700 activates the authentication application 303. Due to this, the authentication unit 600 in the login processing apparatus 100 executes the login process. Here, the details of the login process will be described below.

In S907, the display screen control unit 701 of the home screen display unit 700 determines whether or not the login by the user is a success. In a case where it is determined that the login by the user is a failure, the process returns to S905 and, in a case where there is no ending instruction, the display screen control unit 701 of the home screen display unit 700 displays the initial screen.

On the other hand, in a case where it is determined that the login by the user is a success, the process proceeds to S908. In S908, the display screen control unit 701 of the home screen display unit 700 displays the home screen on the display screen 102.

In S909, the display screen control unit 701 of the home screen display unit 700 activates the serial number display widget 301. Due to this, in the login processing apparatus 100, the widget unit 800 displays the serial number in the widget display region while the display screen control unit 701 of the home screen display unit 700 displays the home screen on the display screen 102.

In detail, the display screen control unit 801 of the widget unit 800 gives an instruction to read out the serial number which is stored in the serial number information storage region 330 with respect to the display content reading unit 802. Due to this, the display content reading unit 802 reads out the serial number from the serial number information storage region 330 and sends notification thereof to the display screen control unit 801. In addition, the display screen control unit 801 of the widget unit 800 displays the notified serial number in the widget display region of the display screen 102.

In S910, the display screen control unit 701 of the home screen display unit 700 determines whether or not the ending instruction is input and, in a case where it is determined that the ending instruction is not input, the process proceeds to S911. In S911, the processing unit 702 of the home screen display unit 700 gives an instruction to activate an arbitrary user application, the icon of which was tapped on the home screen. Subsequently, the processing unit 702 of the home screen display unit 700 receives the tapping operation of the user on the home screen and executes a process according to the received tapping operation.

On the other hand, in S910, in a case where it is determined that the ending instruction is input, the process is ended.

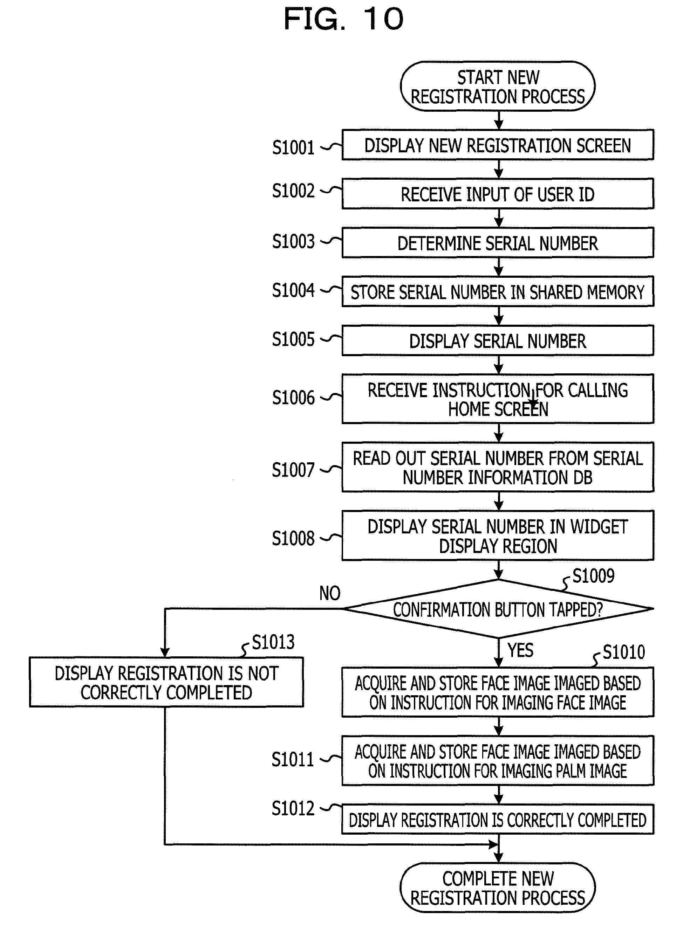

Next, description will be given of the details of the new registration process (S904). FIG. 10 is a flowchart of a new registration process. In S1001, the display screen control unit 501 of the registration unit 500 displays the new registration screen on the display screen 102.

The user input a user ID to be registered on the displayed new registration screen. In S1002, the user ID input unit 502 of the registration unit 500 receives the user ID which is input by the user on the new registration screen and notifies the serial number control unit 503 that the user ID is received.

Upon receiving the notification from the user ID input unit 502, in S1003, the serial number control unit 503 generates random numbers and determines a serial number formed of a 6-digit numeric value. In addition, the display screen control unit 501 is notified of the determined serial number.

In S1004, the serial number control unit 503 stores the determined serial number in the serial number information storage region 330 of the DRAM 203 which is a shared memory.

In S1005, the display screen control unit 501 displays the serial number notified from the serial number control unit 503 on the new registration screen. When the serial number is displayed on a new registration screen, the user inputs an instruction to display the home screen in order to confirm the serial number via the serial number display widget.

When the instruction to display the home screen is input by the user, in S1006, the display screen control unit 701 of the home screen display unit 700 receives the display instruction and displays the home screen on the display screen 102. In addition, the display screen control unit 701 of the home screen display unit 700 determines whether or not there is a widget to activate when displaying the home screen by referring to the widget setting information storage region 332. In the present embodiment, since the serial number display widget is stored in the widget setting information storage region 332 (refer to FIG. 4C), an instruction to activate the serial number display widget 301 is given in the display screen control unit 701.

Upon receiving the instruction, the serial number display widget 301 is activated in S1007. Then, the display screen control unit 801 of the widget unit 800 gives an instruction to read out the serial number to the display content reading unit 802. In addition, the display content reading unit 802 reads out the serial number from the serial number information storage region 330 and sends notification thereof to the display screen control unit 801.

In S1008, the display screen control unit 801 of the widget unit 800 displays the serial number notified from the display content reading unit 802 in the widget display region.

When the serial number is displayed in the widget display region, the user confirms whether or not the displayed serial number is the same as the serial number displayed on the new registration screen. When the serial numbers are the same, the registration application 302 judges that the application is not a fraudulent application, the screen returns to the new registration screen, and the user taps the confirmation button. Here, when the serial numbers are not the same, the registration application 302 judges that the application is a fraudulent application and the user does not tap the confirmation button.

In S1009, the display screen control unit 501 of the registration unit 500 determines whether or not the confirmation button is tapped and, when it is determined that the confirmation button is tapped, the process proceeds to S1010.

In S1010, the face image registration unit 504 of the registration unit 500 receives an instruction to image the face image and controls the first imaging unit 101 to perform imaging of the face image. In addition, the face image registration unit 504 of the registration unit 500 acquires data of the face image which is imaged in the first imaging unit 101 according to the imaging instruction and stores the data in the authentication information storage region 331 of the flash ROM 202 (refer to FIG. 4B).

In S1011, the palm image registration unit 505 of the registration unit 500 receives an instruction to image the palm image and controls the second imaging unit 103 to image the palm image. In addition, the palm image registration unit 505 of the registration unit 500 acquires data of the palm image which is imaged in the second imaging unit 103 according to the imaging instruction and stores the data in the authentication information storage region 331 of the flash ROM 202 (refer to FIG. 4B).

When the storage of the palm image data is completed, the user taps the completion button on the new registration screen. In S1012, when the tap of the completion button is received, the display screen control unit 501 of the registration unit 500 displays a message which indicates that the registration is correctly completed on the new registration screen and ends the new registration process.

On the other hand, in S1009, in a case where it is determined that the confirmation button is not tapped, the display screen control unit 501 of the registration unit 500 displays a message which indicates that the registration was not correctly completed and ends the new registration process.

In this manner, in the login processing apparatus 100 according to the present embodiment, the serial number is determined by generating random numbers at the time of the new registration process. In addition, the determined serial number is stored in a memory region (the serial number information storage region 330) which is shared by the serial number display widget 301 and the registration application 302.

Due to this, the user is able to confirm the serial number in the widget display region by calling up the home screen and activating the serial number display widget at the time of the new registration process. As described above, the serial number display widget displays the serial number in the serial number information storage region 330 which is shared by the registration application 302. For this reason, when the serial number is not correctly stored in the serial number information storage region 330 by the registration application 302, the correct serial number is not displayed in the widget display region.

In other words, in a case where the registration application was a fraudulent application, it is not possible to share the memory region with the serial number display widget 301 and it is not possible to store the serial number in the serial number information storage region 330. As a result, when activating the serial number display widget 301, the correct serial number is not displayed and it is possible for the user to notice that the registration application is a fraudulent application due to this.

In addition, even if the serial number display widget is replaced with a fraudulent widget, it is desirable for the user to perform widget setting with respect to the home screen display application 304 in order to activate the fraudulent widget at the time of the home screen display. Since it is unlikely that the user would take the trouble to perform widget setting for a fraudulent widget with respect to the home screen display application 304, it is possible to say that the method described above for assessing whether or not an application is a fraudulent application using the serial number display widget 301 is effective.

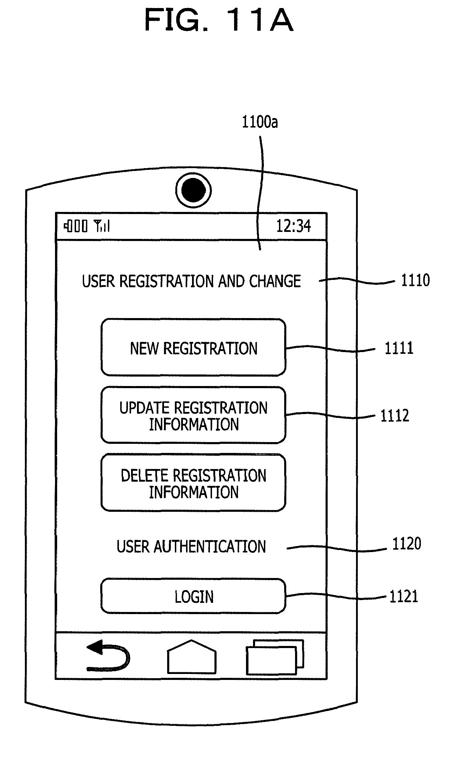

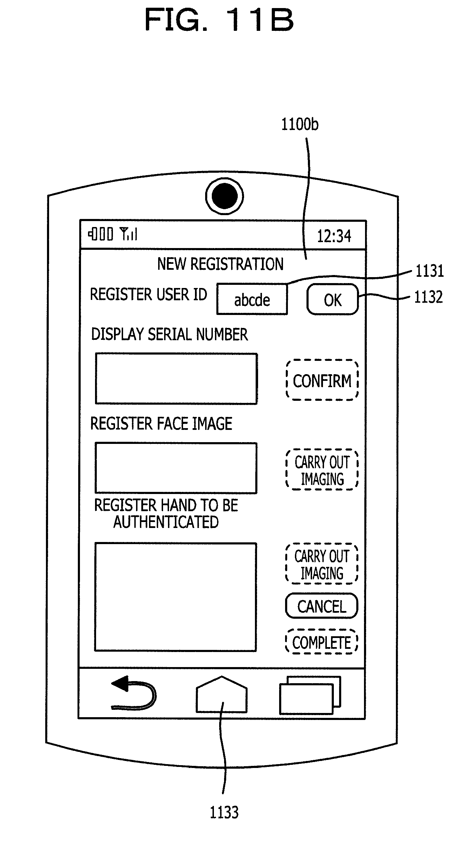

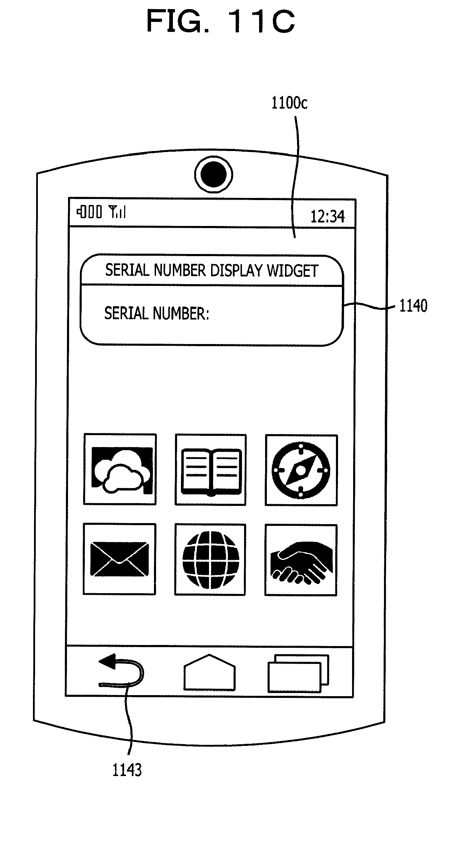

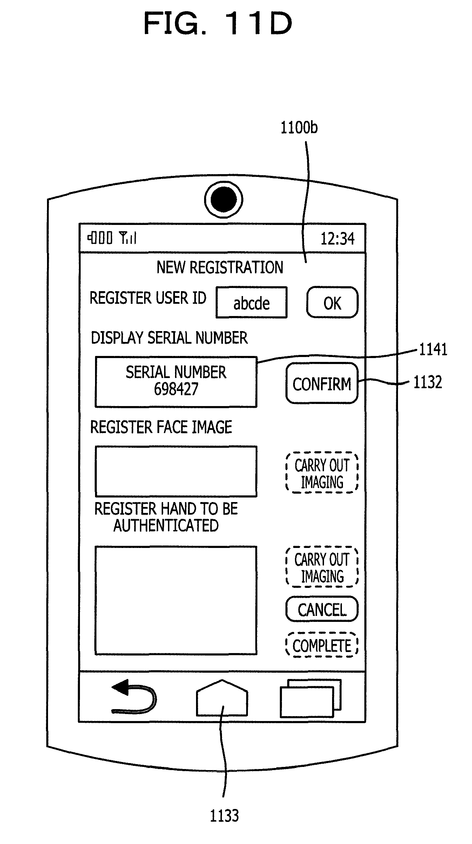

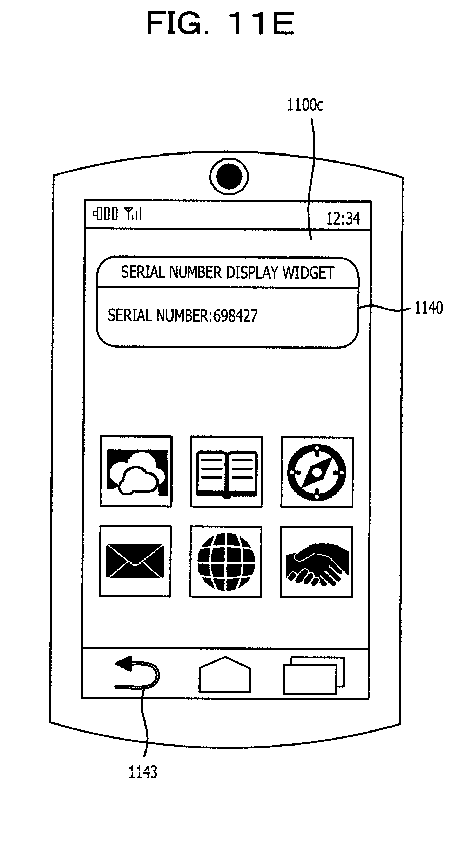

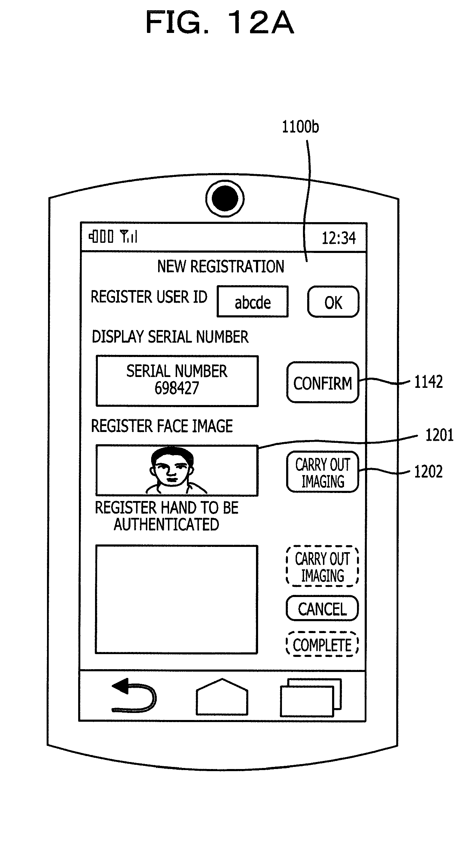

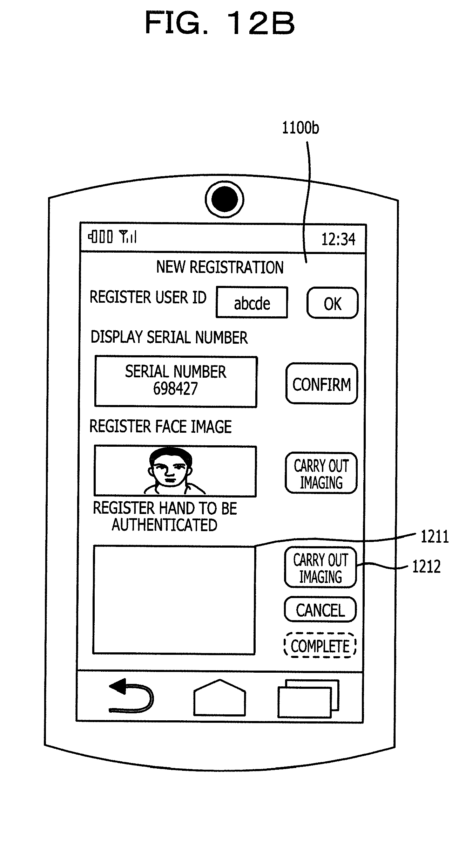

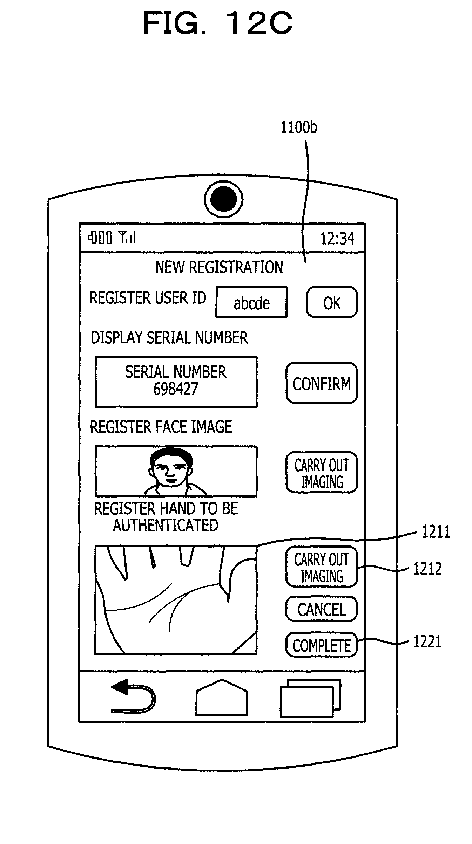

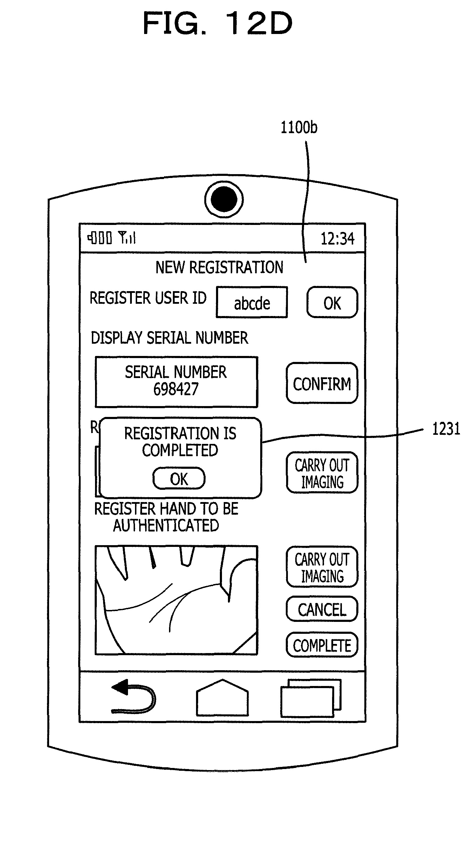

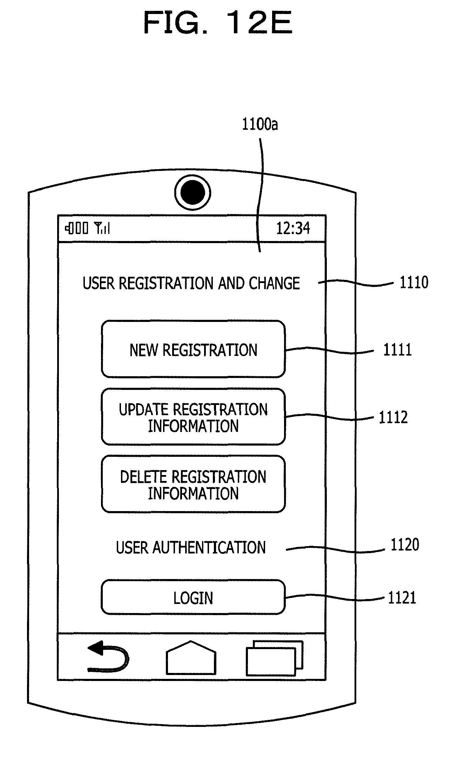

Next, description will be given of transitions on the display screen 102 of the login processing apparatus 100 at the time of the new registration process. FIG. 11 and FIG. 12 are diagrams which illustrate transitions on a display screen of a login processing apparatus at the time of a new registration process. FIG. 11A is a diagram which illustrates an example of an initial screen 1100a which is displayed on the display screen 102 by activating the home screen display application 304. As illustrated in FIG. 11A, the initial screen 1100a includes a "user registration and change" instruction region 1110 and the "user registration and change" instruction region 1110 also includes a "new registration" button 1111.

In a case where the new registration of the user is not completed, a new registration screen 1100b illustrated in FIG. 11B is displayed by the user tapping the "new registration" button 1111 and inputting a new registration instruction. As illustrated in FIG. 11B, the new registration screen 1100b includes a "user ID registration" column 1131 and an "OK" button 1132.

The user ID of the user who carries out the new registration is input in the "user ID registration" column 1131. The user ID is determined by tapping the "OK" button 1132 in a state where the user ID is input. Here, in a state before the "OK" button 1132 is tapped, the user ID is not determined and the serial number is also not determined. For this reason, even when activating the serial number display widget by tapping the home screen call button 1133 and calling up the home screen before the "OK" button 1132 is tapped, nothing is displayed in the widget display region.

FIG. 11C illustrates a state where the home screen call button 1133 is tapped and the serial number display widget 301 is activated before the user taps the "OK" button 1132. As illustrated in FIG. 11C, nothing is displayed in a widget display region 1140.

On the other hand, when the "OK" button 1132 is tapped in a state where the user ID is input, the user ID is determined and the serial number is determined. FIG. 11D illustrates a state where the determined serial number is displayed in the "serial number display" column 1141. When the home screen call button 1133 is tapped in a state where the serial number is displayed in the "serial number display" column 1141, a home screen 1100c is called up.

FIG. 11E illustrates a state where the home screen call button 1133 is tapped in a state where the serial number is displayed in the "serial number display" column 1141. By calling up the home screen 1100c, the serial number display widget 301 is activated and the widget display region 1140 is displayed on the home screen 1100c. Here, in the example in FIG. 11E, "698427" is displayed as the serial number in the widget display region 1140.

Here, the serial number displayed in the widget display region 1140 is the same as the display content displayed in the "serial number display" column 1141 on the new registration screen 1100b. There, the user taps the "return" button 1143 and returns the display screen 102 to the new registration screen 1100b. Here, in a case where the registration application 302 is a fraudulent application, the serial number is not displayed in the widget display region 1140 or a serial number which is different from the serial number displayed in the "serial number display" column 1141 is displayed. For this reason, the user is able to judge whether or not the registration application 302 is a fraudulent application by confirming whether or not the serial number is the same.

When confirming the serial number displayed in the widget display region 1140, as illustrated in FIG. 11D, it is possible to tap a "confirm" button 1142 on the new registration screen 1100b. By tapping the "confirm" button 1142, it is possible to image a face image using the first imaging unit 101 and image a palm image using the second imaging unit 103 and it is possible to store the face image data and the palm image data as the authentication information 410.

FIG. 12A illustrates a state where imaging of the face image by the user is started by tapping the "confirm" button 1142 on the new registration screen 1100b. The face image imaged by the first imaging unit 101 is displayed in a "face image registration" column 1201. The face image which is displayed in the "face image registration" column 1201 is determined by the user tapping an "imaging" button 1202 and stored in the authentication information storage region 331 (refer to FIG. 12B).

When the face image is determined, the second imaging unit 103 is activated. FIG. 12C illustrates a state where the second imaging unit 103 is activated. Since the user holds out their palm to be registered in front of the second imaging unit 103 by activating the second imaging unit 103, the image of the user's palm which is imaged by the second imaging unit 103 is displayed in a "registration of hand to be authenticated" column 1211 as illustrated in FIG. 12C.

The image of the user's palm which is displayed in the "registration of hand to be authenticated" column 1211 is confirmed by tapping an "imaging" button 1212, and stored in the authentication information storage region 331. When the palm image is confirmed and a "complete" button 1221 is tapped by the user, a message 1231 which indicates that the registration is completed is displayed on the new registration screen 1100b as illustrated in FIG. 12D. Due to this, it is possible for the user to recognize that the new registration process is correctly completed. Here, when the "OK" button of the message 1231 is tapped, the screen returns to the initial screen 1100a as illustrated in FIG. 12E.

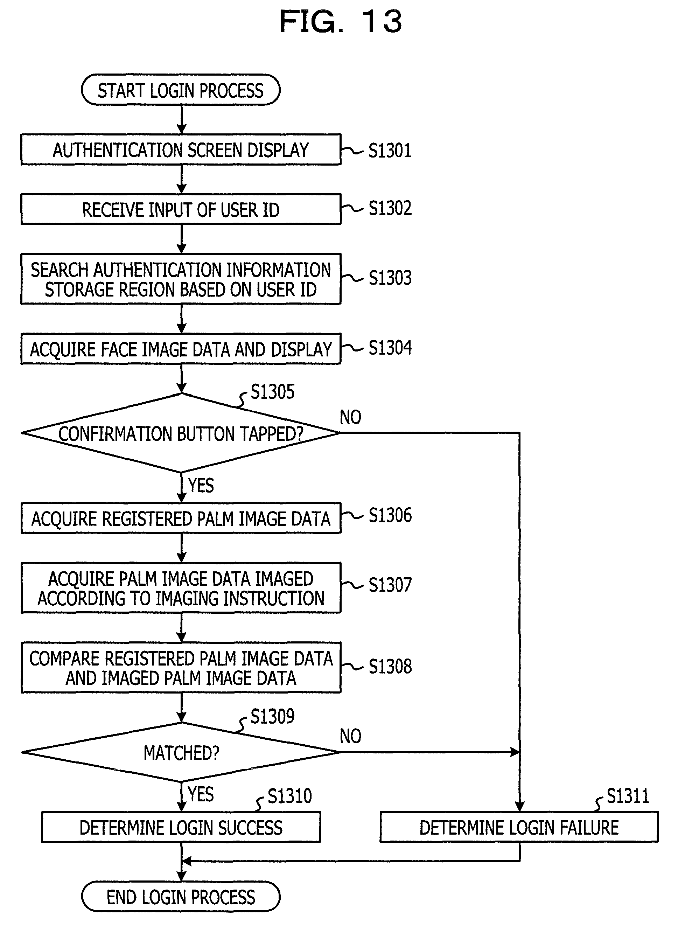

Next, description will be given of details of the login process (S906). FIG. 13 is a flowchart of the login process. In S1301, the display screen control unit 601 of the authentication unit 600 displays an authentication screen on the display screen 102.

The user inputs a registered user ID on the displayed authentication screen. In S1302, the user ID input unit 602 of the authentication unit 600 receives the user ID which is input by the user on the authentication screen and notifies the face image authentication unit 603 and the palm image authentication unit 604 of the received user ID.

In S1303, the face image authentication unit 603 of the authentication unit 600 refers to the authentication information storage region 331 of the flash ROM 202 based on the user ID of which notification is given by the user ID input unit 602.

In S1304, the face image authentication unit 603 of the authentication unit 600 reads out the face image data which is stored in association with the notified user ID in the authentication information storage region 331 and notifies the display screen control unit 601 of the authentication unit 600 of the face image data. Furthermore, the display screen control unit 601 of the authentication unit 600 displays the notified face image data on the authentication screen.

The user judges whether or not the displayed face image data is their own face image by the face image data being displayed on the authentication screen and taps a confirmation button on the authentication screen in a case where it is judged that the face image is their own face image.

In S1305, the face image authentication unit 603 of the authentication unit 600 determines whether or not the confirmation button is tapped. In a case where it is determined that the confirmation button is not tapped, the process proceeds to S1311. In S1311, the face image authentication unit 603 of the authentication unit 600 determines that the login process is a failure and ends the login process.

On the other hand, in a case where it is determined that the confirmation button is tapped, the process proceeds to S1306. In S1306, the palm image authentication unit 604 refers to the authentication information storage region 331 and reads out the palm image data which is stored in association with the notified user ID.

In addition, since the second imaging unit 103 is activated by tapping the confirmation button, the user images a palm image. In S1307, the palm image authentication unit 604 acquires the palm image data which is imaged according to an imaging instruction of the user.

In S1308, the palm image authentication unit 604 of the authentication unit 600 compares the palm image data which is read out in S1306 and the palm image data which is acquired in S1307.

In S1309, the palm image authentication unit 604 of the authentication unit 600 determines whether or not the palm image data which is read out in S1306 and the palm image data which is acquired in S1307 match. In a case where it is determined that the palm image data do not match in S1309, the process proceeds to S1311.

In S1311, the palm image authentication unit 604 of the authentication unit 600 determines that the login process is a failure and ends the login process. On the other hand, in a case where it is determined that the palm image data do match, the process proceeds to S1310. In S1310, the palm image authentication unit 604 of the authentication unit 600 determines that the login process is a success and ends the login process.

In this manner, in the login processing apparatus 100 according to the present embodiment, the face image data of the user which is stored in the authentication information storage region 331 in association with the input user ID is displayed on the authentication screen at the time of the login process.

For this reason, even in a case where the authentication application 303 is a fraudulent application and an arbitrary image is displayed on the authentication screen, it is possible for the user to notice this immediately. In other words, the user is able to judge whether or not an authentication application is a fraudulent application simply by confirming whether or not the face image displayed on the authentication screen is their own face image.

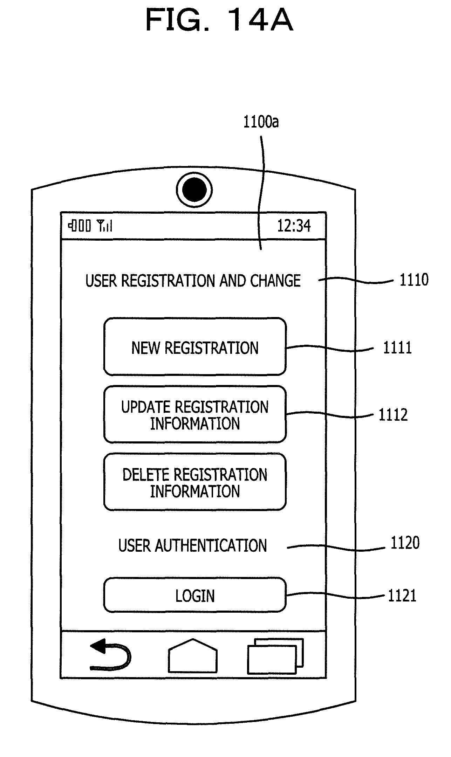

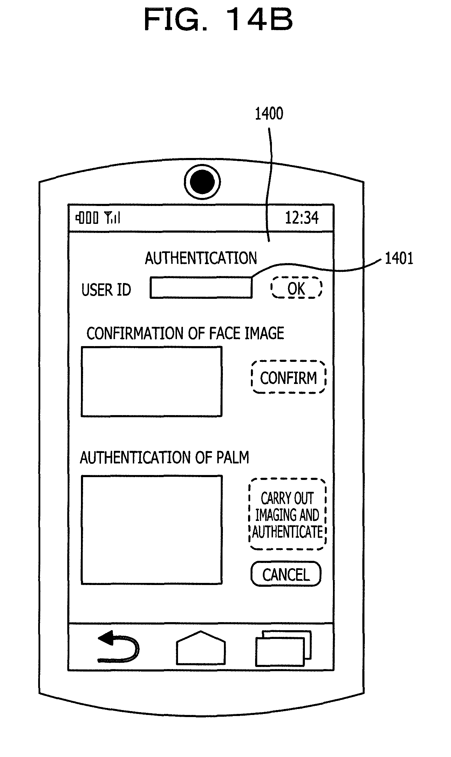

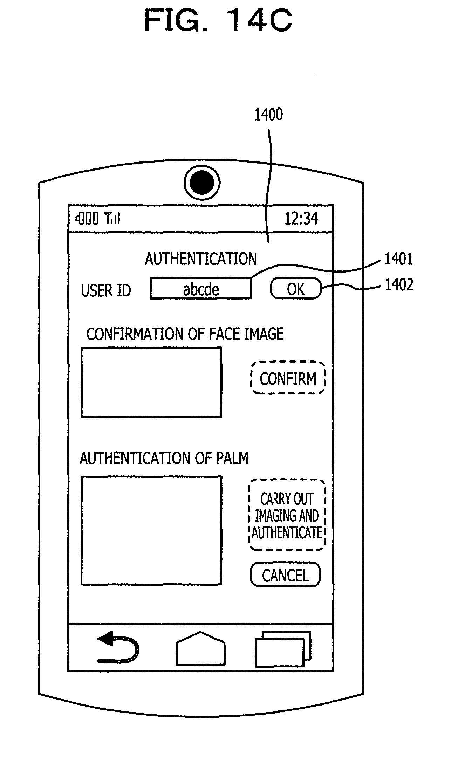

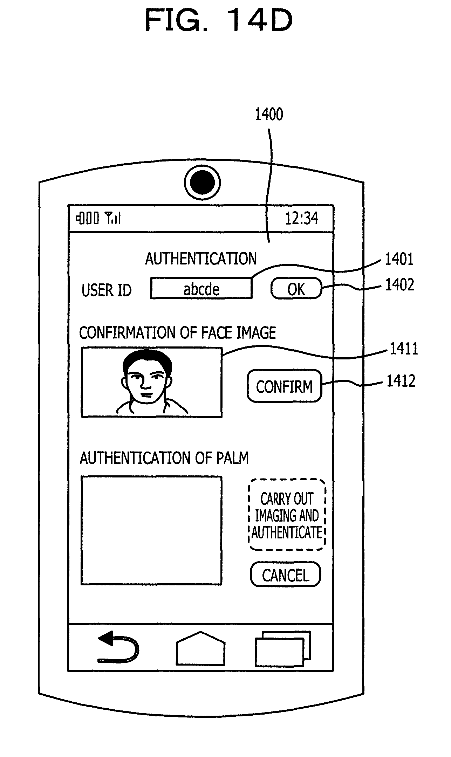

Next, description will be given of transitions on the display screen 102 of the login processing apparatus 100 at the time of the login process. FIG. 14 is a diagram which illustrates transitions on a display screen of a login processing apparatus at the time of a login process. FIG. 14A is a diagram which illustrates an example of the initial screen 1100a which is displayed on the display screen 102 by activating the home screen display application 304. As illustrated in FIG. 14A, the initial screen 1100a includes a "user authentication" instruction region 1120 and the "user authentication" instruction region 1120 further includes a "login" button 1121.

An authentication screen 1400 illustrated in FIG. 14B is displayed by the user tapping the "login" button 1121 and inputting a login instruction.

As illustrated in FIG. 14B, the authentication screen 1400 includes a "user ID" input column 1401. When the user ID is input in the "user ID" input column 1401 by the user, it is possible to tap an "OK" button 1402 as illustrated in FIG. 14C.

When the input of the user ID in the "user ID" input column 1401 is completed and the "OK" button 1402 is tapped, the screen transitions to FIG. 14D. As illustrated in FIG. 14D, the face image data which is stored in the authentication information storage region 331 in association with the input user ID is displayed in a "face image confirmation" column 1411.

The user judges whether or not the face image data displayed in the "face image confirmation" column 1411 is their own face image. In a case where it is judged that the image data is an image of the user's own face, the user taps the "confirm" button 1412.

Here, it may be assumed that the registration unit 500 does not have the face image registration unit 504 and stores arbitrary image data selected by the user at the time of the new registration process in association with the user ID as in the related art. In this case, arbitrary image data according to the input of the user ID is displayed. However, typically, the user often forgets the image data which they themselves selected and it is not easy to judge whether or not the displayed image data is the image data which the user themselves selected. For this reason, even when the authentication application is a fraudulent application and different image data from the image data which the user themselves selected is displayed, there is a high possibility that the user will continue the operation without noticing the fraudulent application.

As a counter to this, as illustrated in FIG. 14D, when set such that the image of the user's own face is displayed, the user is able to immediately notice an abnormality in a case where different image data is displayed. In other words, it is possible to judge that the application is a fraudulent application and end the fraudulent application without tapping the "confirm" button 1412.

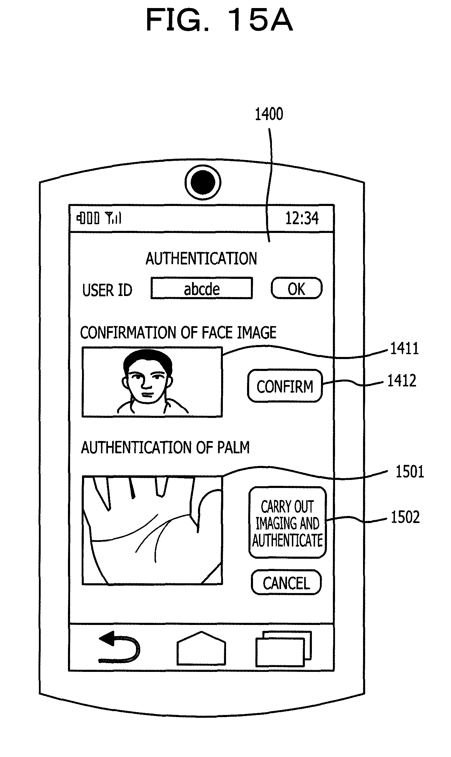

On the other hand, when the image of the user's own face is correctly displayed in the "face image confirmation" column 1411 and the user taps the "confirm" button 1412, the second imaging unit 103 is activated and starts imaging. FIG. 15A illustrates a state where the user taps the "confirm" button 1412 and the second imaging unit 103 is activated.

Since the user holds out their palm in front of the second imaging unit 103 in order to perform a palm authentication by activating the second imaging unit 103, the image of the user's palm is displayed in a "palm authentication" column 1501 as illustrated in FIG. 15A.

When the user taps an "image and authenticate" button 1502 in a state where the image of the user's palm is displayed in the "palm authentication" column 1501, the image of the user's palm which is displayed in the "palm authentication" column 1501 is confirmed. Then, the confirmed palm image data and the palm image data stored in the authentication information storage region 331 are compared.

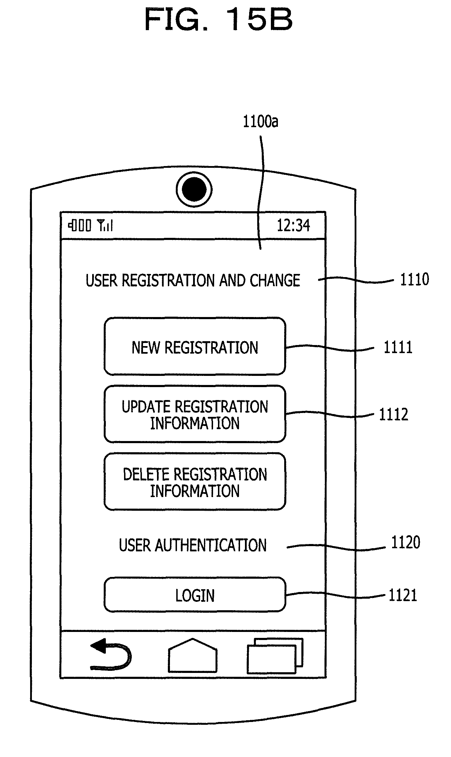

As a result of the comparison, in a case where it is determined that the confirmed palm image data and the palm image data stored in the authentication information storage region 331 do not match, it is determined that the login process is a failure and the screen returns to the initial screen 1100a as illustrated in FIG. 15B.

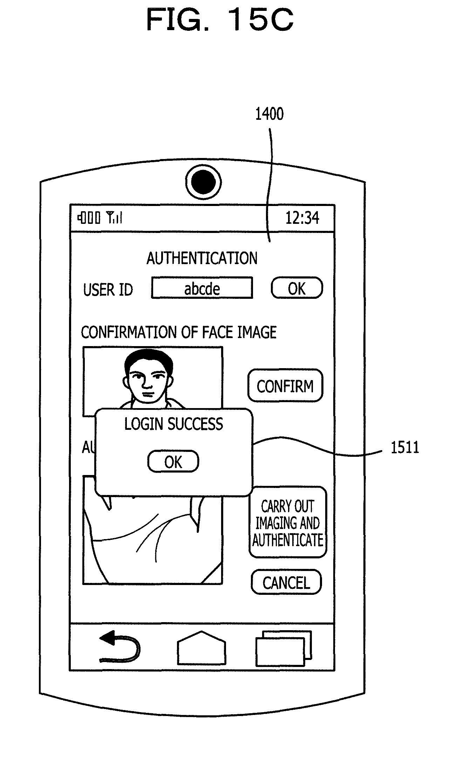

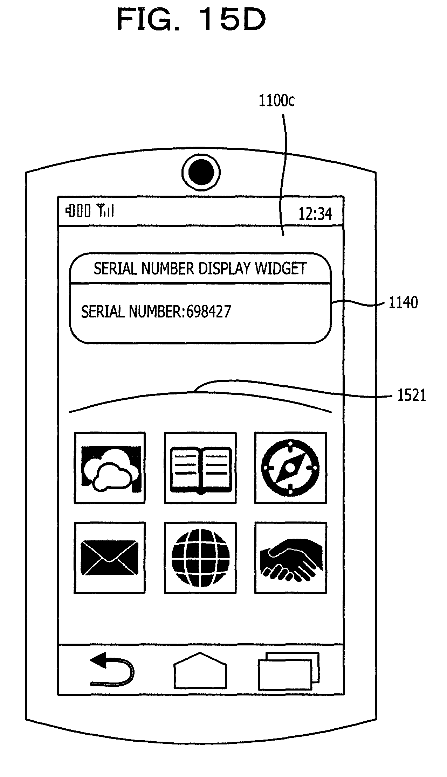

On the other hand, in a case where it is determined that the confirmed palm image data and the palm image data stored in the authentication information storage region 331 do match, it is determined that the login process is a success. As a result, a message 1511 which indicates that the login is a success is displayed as illustrated in FIG. 15C. Furthermore, when the "OK" button of the message 1511 is tapped, the home screen 1100c is displayed as illustrated in FIG. 15D.

Here, as illustrated in FIG. 15D, an icon 1521 which activates the user application 305 is displayed on the home screen 1100c. For this reason, the user is able to activate a desired user application by specifying an arbitrary icon.

As is clear from the above description, the login processing apparatus 100 according to the present embodiment determines a serial number by generating random numbers in response to the input of the user ID at the time of the new registration process and stores the serial number in the memory shared by the registration application and the serial number display widget.

Due to this, the user is able to easily judge whether or not the registration application is a fraudulent application based on the serial number which is displayed by calling up the home screen and activating the serial number display widget at the time of new registration process.

In addition, the login processing apparatus 100 according to the present embodiment stores the image data of the user's own face at the time of the new registration process in association with the user ID and displays the face image data which is stored in association with the user ID in response to the input of the user ID at the time of login process.

Due to this, the user is able to judge whether or not the authentication application is a fraudulent application simply by confirming whether or not the image displayed on the authentication screen is their own face image data.

In other words, according to the login processing apparatus 100 according to the present embodiment, it is possible to increase a capacity for detecting fraudulent applications and strengthen security.

### [Second Embodiment]

In the first embodiment described above, description was given in which the user is able to easily judge whether or not an authentication application is a fraudulent application at the time of a login process by storing the image data of the user's own face in association with the user ID at the time of new registration process.

With respect to this, in the second embodiment, description will be given in which the user is able to easily judge whether or not a registration application is a fraudulent application at the time of a re-registration process by storing the image data of the user's own face in association with the user ID at the time of a new registration process.

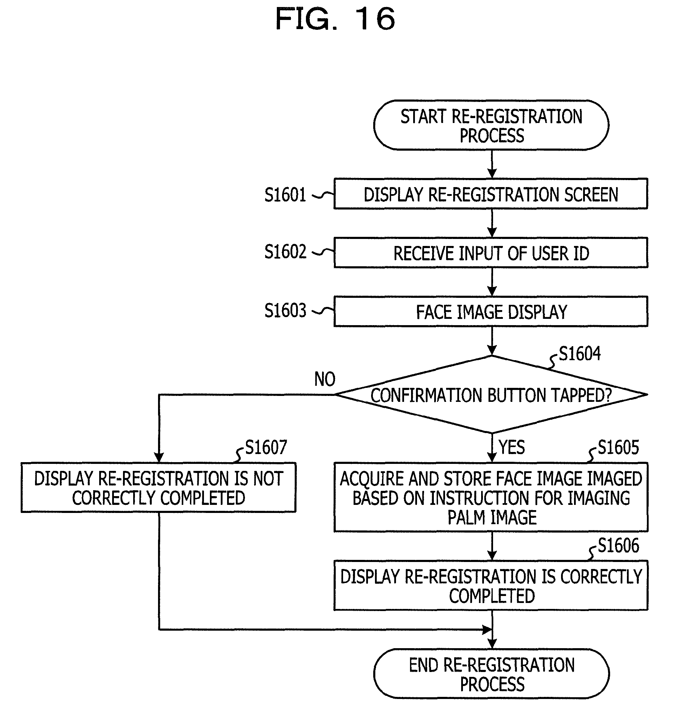

FIG. 16 is a flowchart of a re-registration process. In S1601, the display screen control unit 501 of the registration unit 500 displays a re-registration screen on the display screen 102.

The user inputs a registered user ID on the displayed re-registration screen. In S1602, the user ID input unit 502 of the registration unit 500 receives the user ID which is input by the user on the re-registration screen and notifies the face image registration unit 504 of the received user ID.

In S1603, the face image registration unit 504 of the registration unit 500 refers to the authentication information storage region 331, reads out the face image data which is stored in association with the user ID which is notified from the user ID input unit 502, and notifies the display screen control unit 501 of the face image data. Furthermore, the display screen control unit 501 of the registration unit 500 displays the notified face image data on the re-registration screen.

The user judges whether or not the displayed face image data is their own face image by the face image data being displayed on the re-registration screen and taps a confirmation button in a case where it is judged that the face image data is their own face image.

In S1604, the display screen control unit 501 of the registration unit 500 determines whether or not the confirmation button is tapped. In a case where it is determined that the confirmation button is not tapped, the process proceeds to S1607. In S1607, the face image registration unit 504 of the registration unit 500 determines that it is not possible to correctly complete the re-registration and ends the re-registration process.

On the other hand, in a case where it is determined that the confirmation button is tapped, the process proceeds to S1605. In S1605, the palm image registration unit 505 of the registration unit 500 receives an instruction to image the palm image and controls the second imaging unit 103 to image the palm image. In addition, the palm image registration unit 505 of the registration unit 500 acquires data of the palm image which is imaged in the second imaging unit 103 according to the imaging instruction and stores the data in the authentication information storage region 331 of the flash ROM 202.

When the storage of the palm image data is completed, the user taps the completion button on the re-registration screen. In S1606, when the tap of the completion button is received, the display screen control unit 501 of the registration unit 500 displays a message which indicates that the re-registration of the palm image is correctly completed on the re-registration screen and ends the re-registration process.

In this manner, in the login processing apparatus 100 according to the present embodiment, the face image data of the user which is stored in the authentication information storage region 331 in association with the input user ID is displayed on the re-registration screen at the time of the re-registration process.

For this reason, even in a case where the registration application 302 is a fraudulent application and an arbitrary image is displayed on the re-registration screen, it is possible for the user to notice immediately. In other words, the user is able to judge whether or not the registration application is a fraudulent application simply by confirming whether or not the face image displayed on the re-registration screen is their own face image.

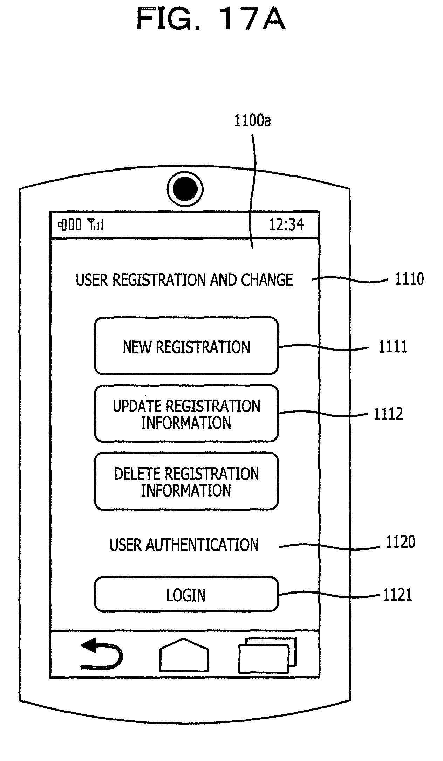

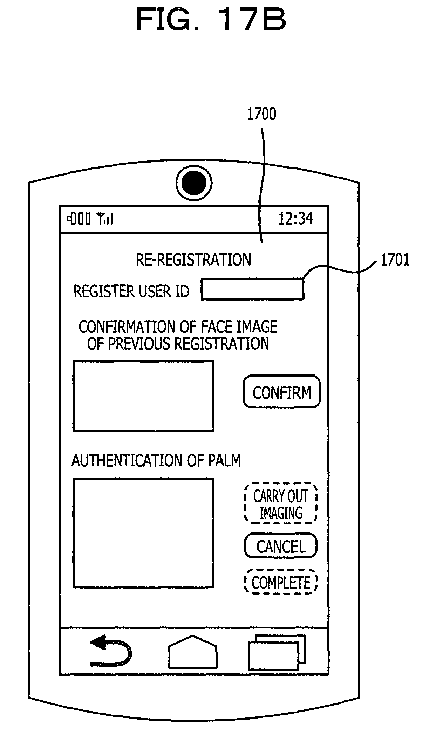

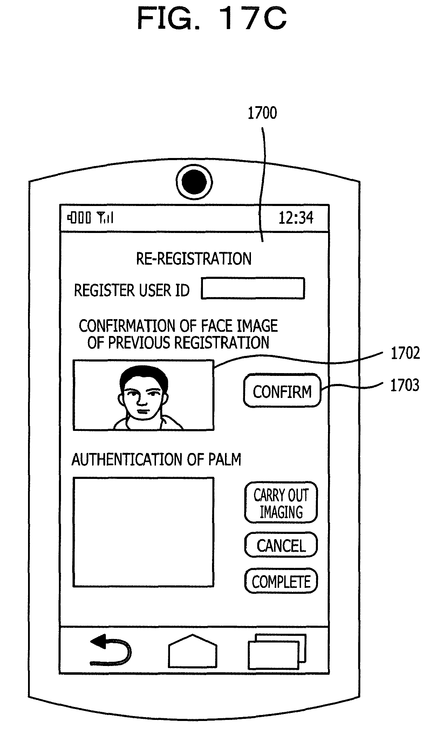

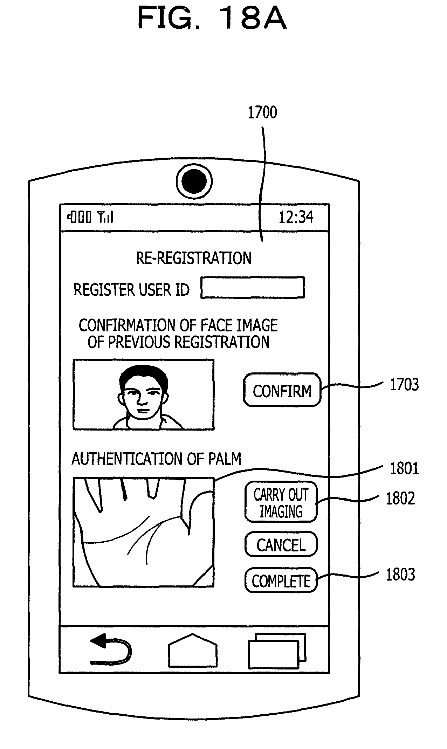

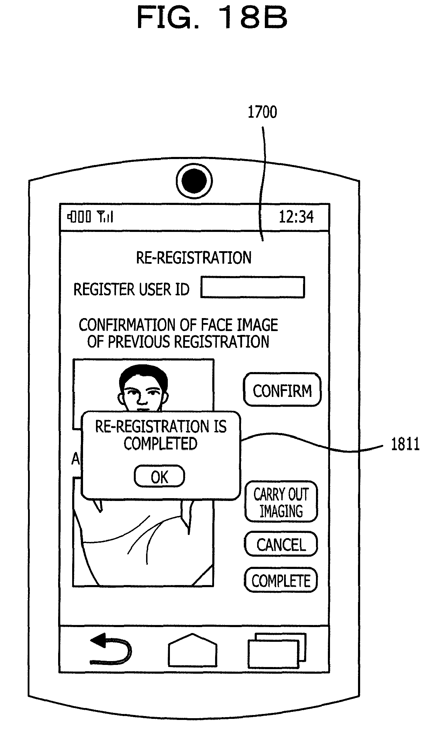

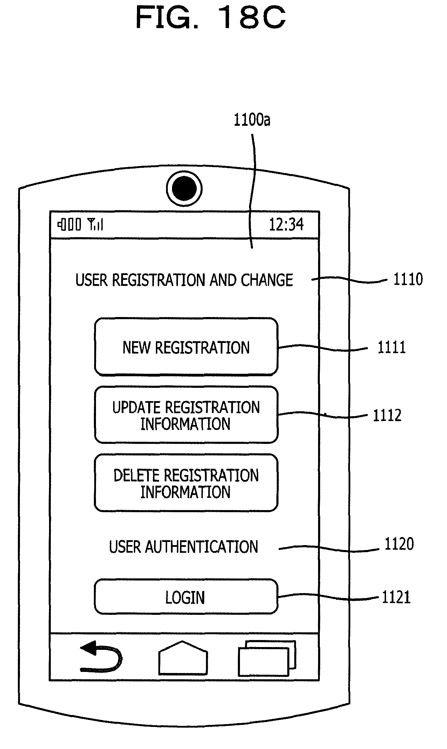

Next, description will be given of transitions of the display screen 102 of the login processing apparatus 100 at the time of the re-registration process. FIG. 17 and FIG. 18 are diagrams which illustrate transitions on a display screen of a login processing apparatus at the time of a re-registration process. FIG. 17A is a diagram which illustrates an example of the initial screen 1100a which is displayed on the display screen 102 by activating the home screen display application 304. As illustrated in FIG. 17A, the initial screen 1100a includes a "user registration and change" instruction region 1110 and the "user registration and change" instruction region 1110 further includes a "registered information update" button 1112.

A re-registration screen 1700 illustrated in FIG. 17B is displayed by the user tapping the "registered information update" button 1112 and inputting the re-registration instruction.

As illustrated in FIG. 17B, the re-registration screen 1700 includes a "user ID registration" column 1701. When a registered user ID is input in the "user ID registration" column 1701 by the user, the screen transitions to FIG. 17C. As illustrated in FIG. 17C, the face image data which is stored in the authentication information storage region 331 in association with the input user ID is displayed in a "previously registered face image confirmation" column 1702.

The user judges whether or not the face image data displayed in the "previously registered face image confirmation" column 1702 is their own face image. In a case where it is judged that the image data is their own face image, the user taps a "confirm" button 1703.

When the user taps the "confirm" button 1703, the second imaging unit 103 is activated and starts imaging. FIG. 18A illustrates a state where the user taps the "confirm" button 1703 and the second imaging unit 103 is activated.

Since the user holds out their palm in front of the second imaging unit 103 in order to re-register the palm image by activating the second imaging unit 103, the image of the user's palm is displayed in a "registration of hand to be authenticated" column 1801 as illustrated in FIG. 18A.

When the user taps an "imaging" button 1802 in a state where the image of the user's palm is displayed in the "registration of hand to be authenticated" column 1801, the palm image data of the user which is displayed in the "registration of hand to be authenticated" column 1801 is confirmed. Then, the confirmed palm image data is stored in the authentication information storage region 331 in association with the user ID.

When the palm image data is confirmed and a "complete" button 1803 is tapped by the user, a message 1811 which indicates that the re-registration is completed is displayed on the re-registration screen 1700 as illustrated in FIG. 18B. Due to this, it is possible for the user to recognize that the re-registration process is correctly completed. Here, when the "OK" button of the message 1811 is tapped, the screen returns to the initial screen 1100a as illustrated in FIG. 18C.

As is clear from the above description, the login processing apparatus 100 according to the present embodiment displays the face image data which is stored in association with the user ID in response to the input of the user ID at the time of the re-registration process.

Due to this, the user is able to judge whether or not the registration application is a fraudulent application simply by confirming whether or not the image displayed on the re-registration screen is their own face image data.

In other words, according to the login processing apparatus 100 according to the present embodiment, it is possible to increase a capacity for detecting fraudulent applications and strengthen security.

### [Third Embodiment]

In the first and second embodiments described above, biometric authentication is performed using a palm image which is obtained by imaging the palm of the user; however, the site used for the biometric authentication is not limited to a palm and may be another site (for example, an iris).

In addition, in the first embodiment described above, the screen transitions to the authentication screen due to the login instruction being input on the initial screen; however, the authentication screen may be displayed without displaying the initial screen when activating or resuming use of the login processing apparatus 100 after a new registration process is completed.

In addition, in the second embodiment described above, the registration unit 500 executes the re-registration process; however, a re-registration unit, which is realized by separately installing a re-registration application and executing the re-registration application, may execute the re-registration process.

Here, the present disclosure is not limited to the embodiments disclosed in detail and various types of modifications or changes are possible without departing from the Claims.

## Claims

1. An apparatus comprising:
a registration screen display unit configured to display a registration screen on a screen based on a login screen display application program;
a generating unit configured to generate random character strings corresponding to an input of an identifier on the registration screen;
a character string display unit configured to display the character strings on the registration screen;
a storage unit configured to store the character strings in a memory; and
a widget display unit configured to read out the character strings from the memory and display a widget of the character strings on a screen based on a widget display application program.

2. The apparatus according to claim 1,
wherein a region in which the character strings are stored in the memory is a region in which reading and writing are shared by the login screen display application program and the widget display application program.

3. The apparatus according to claim 1 or 2, further comprising:
a face image storage unit configured to store face image data of a user, which is obtained by imaging the user who input the identifier, in association with the identifier.

4. The apparatus according to claim 3, further comprising:
an authentication image storage unit configured to store authentication image data, which is obtained by imaging a site which is used for biometric authentication of the user who input the identifier, in association with the identifier.

5. The apparatus according to claim 4,
wherein the face image storage unit is to execute a face image data storing process and the authentication image storage unit is to execute an authentication image data storing process when information is input which indicates that the user confirms the character strings which are displayed by the widget display unit.

6. The apparatus according to claim 5, further comprising:
an authentication screen display unit configured to display an authentication screen on the screen based on the login screen display application program; and
a face image display unit configured to, in response to the input of the identifier on the authentication screen, display the face image data which is stored in association with the input identifier on the authentication screen.

7. The apparatus according to claim 6, further comprising:
an imaging unit configured to be able to execute a process for imaging a site which is used for biometric authentication of a user who input the identifier on the authentication screen when there is an input which indicates that the user confirms a face image which is displayed by the face image display unit.

8. The apparatus according to claim 7, further comprising:
a unit configured to determine login correctness based on the authentication image data which is stored in association with the identifier which is input on the authentication screen and authentication image data which is obtained by imaging with the imaging unit.

9. A login processing method using a computer, the method comprising:
displaying a registration screen on a screen based on a login screen display application program;
generating random character strings corresponding to an input of an identifier on the registration screen;
displaying the character strings on the registration screen;
storing the character strings in a memory; and
reading out the character strings from the memory and displaying a widget of the character strings on a screen based on a widget display application program.

10. The login processing method according to claim 9,
wherein a region in which the character strings are stored in the memory is a region in which reading and writing are shared by the login screen display application program and the widget display application program.

11. The login processing method according to claim 9 or 10, further comprising:
storing face image data of a user, which is obtained by imaging the user who input the identifier, in association with the identifier.

12. The login processing method according to claim 11, further comprising:
storing authentication image data, which is obtained by imaging a site which is used for biometric authentication of the user who input the identifier, in association with the identifier.

13. The login processing method according to claim 12,
wherein the storing face image data and the storing authentication image data is executed when information is input which indicates that the user confirms the character strings which are displayed on the screen.

14. The login processing method according to claim 13, further comprising:
displaying an authentication screen on the screen based on the login screen display application program; and
displaying the face image data which is stored in association with the input identifier on the authentication screen in response to the input of the identifier on the authentication screen.

15. A program which, when executed on a computer, causes the computer to carry out the method of any of claims 9 to 14.
